Europäisches Patentamt

European Patent Office

Office européen des brevets

(11) Numéro de publication: **0 352 149**
**A1**

**DEMANDE DE BREVET EUROPEEN**

(21) Numéro de dépôt: **89401583.3**

(51) Int. Cl.5: **H 02 B 1/32**

(22) Date de dépôt: **08.06.89**

(30) Priorité: **04.07.88 FR 8809506**

(43) Date de publication de la demande:
**24.01.90 Bulletin 90/04**

(84) Etats contractants désignés:
**BE DE ES GB IT NL**

(71) Demandeur: **TELEMECANIQUE**
**43-45, Boulevard Franklin Roosevelt**
**F-92504 Ruell-Malmaison Cedex (FR)**

(72) Inventeur: **Lafosse, Jean**
**25, rue Dame Rose**
**F-21310 Mirebeau (FR)**

**Schmit, Francis**
**23, rue du Docteur Barbier**
**F-21100 Dijon (FR)**

(74) Mandataire: **Marquer, Francis et al**
**Cabinet Moutard 35, Avenue Victor Hugo**
**F-78960 Voisins le Bretonneux (FR)**

(54) **Dispositif de support pour appareils électriques.**

(57) Dispositif de support pour appareils électriques à inclure dans une enveloppe telle que coffret ou armoire de distribution électrique basse tension.

   Une console (21) comprend une pièce (22a) montée de manière amovible sur un support (20), un profilé (23) disposé perpendiculairement au support et fixé à la pièce (22a), et une pièce porteuse (22b) montée sur le profilé et conformée pour porter des appareils électriques (15) ou un support déporté pour de tels appareils.

FIG.2

EP 0 352 149 A1

**Description**

## DISPOSITIF DE SUPPORT POUR APPAREILS ELECTRIQUES.

La présente invention concerne un dispositif de support pour appareils électriques, ce dispositif étant destiné à être inclus dans une enveloppe telle que coffret ou armoire de distribution électrique basse tension.

Les appareils électriques d'interruption et/ou de protection basse tension n'ont pas toujours des cotes uniformes en profondeur ; il en résulte un aspect disparate lorsqu'on monte plusieurs appareils sur un même profilé ou sur une même platine dans une enveloppe de distribution. Or, il est souhaitable que les appareils rassemblés dans une enveloppe soient alignés pour faciliter leur contrôle et leur manipulation.

De plus, on désire parfois, soit caler un appareil par rapport à un plan de montage situé au fond d'une enveloppe de distribution, afin de faciliter le couplage de l'appareil avec une commande extérieure prévue sur une porte de l'enveloppe, soit caler par rapport au fond de l'enveloppe un plan de montage complet tel qu'un profilé ou une platine.

L'invention a notamment pour but de créer un dispositif simple et à bas prix de revient pour former des consoles permettant de répondre à ces desiderata.

Elle vise aussi, dans certains cas, à permettre un montage latéral additionnel d'appareils sur de telles consoles.

Selon l'invention, le dispositif de support comporte un support susceptible d'être fixé sur une paroi fixe et par une console comprenant :
- une pièce de fixation arrière montée de manière amovible sur le support,
- un profilé d'avancée qui est disposé perpendiculairement à la paroi fixe et au support et qui est fixé à la pièce de fixation arrière,
- une pièce avant porteuse conformée pour porter des appareils électriques ou un support déporté pour de tels appareils, cette pièce étant montée sur le profilé, de préférence dans une position réglable en continu.

Après fixation du profilé d'avancée, découpé à la longueur voulue, sur la pièce de fixation arrière, il suffit de monter et d'ajuster la position de la pièce avant porteuse sur le profilé.

On associe avantageusement des moyens de coulissement et des moyens de serrage à la pièce de fixation et/ou à la pièce porteuse pour autoriser respectivement un glissement relatif continu et un serrage de ladite pièce sur le profilé. L'invention permet ainsi d'utiliser des profilés ordinaires du commerce, découpés à la longueur souhaitée.

De préférence, les moyens de coulissement comprennent des fentes ménagées par paires dans la pièce de fixation et/ou la pièce porteuse, chaque paire de fentes étant apte à recevoir les deux ailes du profilé, tandis que des moyens de serrage continu tels que des vis assurent le serrage des ailes du profilé dans les fentes. Il est intéressant que chaque fente soit délimitée par un rebord ou retour du corps de pièce qui est élastiquement déplaçable par la vis.

La pièce de fixation et la pièce porteuse sont, de préférence, constituées par des blocs de fixation identiques dont chacun présente vers l'arrière des éléments d'encliquetage sur le support et vers l'avant un nez d'encliquetage pour les appareils électriques.

Un mode de réalisation du dispositif sera décrit ci-après, à titre d'exemple non limitatif, avec référence aux dessins annexés :

La figure 1 montre en plan le schéma d'une enveloppe de distribution électrique munie du dispositif de support conforme à l'invention ;

La figure 2 est une vue en perspective éclatée d'un mode de réalisation du dispositif ;

La figure 3 est une perspective d'un bloc de fixation constituant, soit une pièce de fixation arrière, soit une pièce porteuse, du dispositif de support ;

Les figures 4 à 6 sont respectivement une élévation de côté, respectivement une élévation de face et une vue de dessus du bloc de fixation ;

La figure 7 est une vue agrandie du détail A de la figure 5 ;

Les figures 8 et 9 montrent en vue de face deux variantes de réalisation du bloc de fixation.

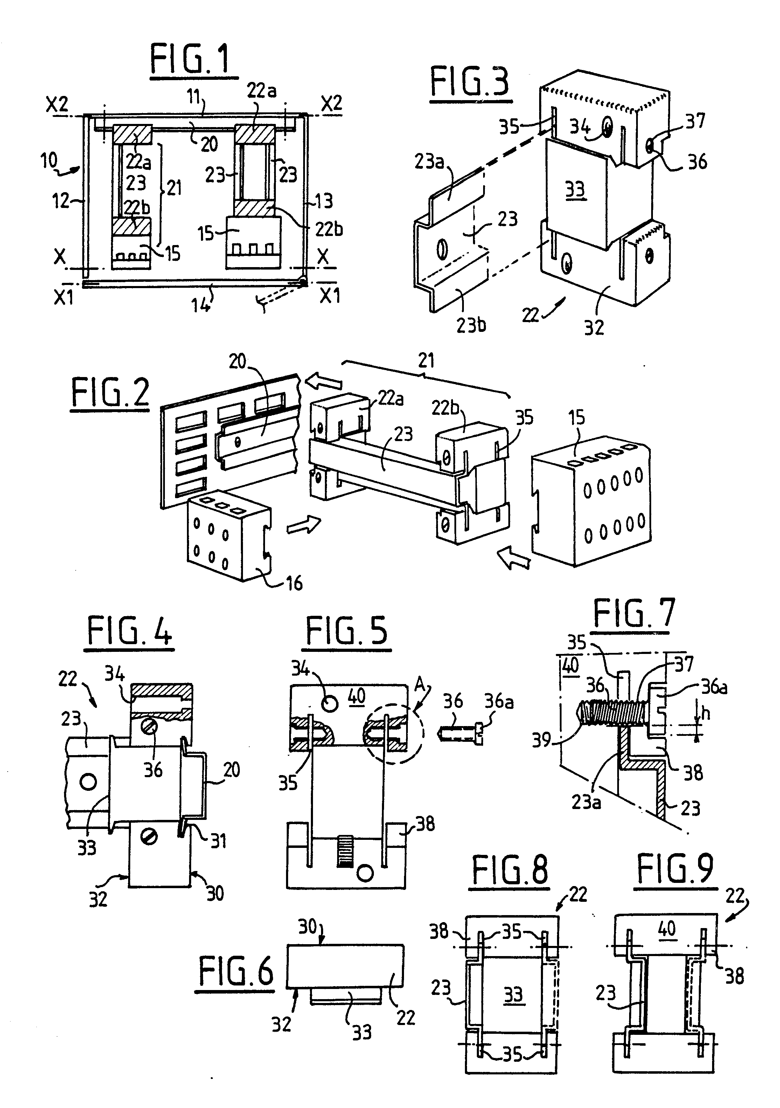

L'enveloppe 10 illustrée sur la figure 1 présente une paroi de fond 11, deux parois latérales 12, 13 et une face avant ou une porte 14 donnant accès à des appareils électriques 15 tels que contacteurs, disjoncteurs, relais ou autres appareils d'interruption et de protection basse tension.

Comme on le voit figure 1, la face avant des appareils 15 est située, pour améliorer leur présentation et faciliter le travail des usagers, dans un même plan X-X qui est parallèle aux plans X1-X1 de la face avant 14 et X2-X2 du fond 11 de l'enveloppe 10.

A cet effet, les appareils 15 sont présentés aux extrémités libres de consoles appartenant aux dispositifs selon l'invention. Ces dispositifs comportent (voir figures 1 et 2) un support 20 fixé à la paroi de fond 11 et une console 21 comprenant :
- une pièce de fixation arrière 22a montée de manière amovible sur le support,
- un ou deux profilés d'avancée 23 qui sont disposés perpendiculairement à la paroi de fond 11 et au support 20 et qui sont solidarisés avec la pièce de fixation 22a,
- une pièce avant porteuse 22b conformée pour porter les appareils 15.

Le support 20 peut être une platine perforée, un profilé normalisé (voir figure 2) ou tout autre support de forme générale parallèle à la paroi de fond 11.

La pièce de fixation arrière 22a et la pièce avant porteuse 22b peuvent être des pièces de formes différentes. Elles sont cependant de préférence des blocs isolants identiques 22 qui seront décrits plus en détail par la suite.

Le profilé d'avancée 23 peut présenter des trous oblongs pour la fixation par vis des pièces 22a, 22b. Il est de préférence constitué par un profilé normalisé par exemple du type chapeau 35 x 7,5 mm ou 35 x 15 mm selon la norme européenne EN 50022 ; un tel profilé est disponible dans le commerce et facile à découper à la longueur voulue pour assurer le positionnement de la face avant de l'appareil 15 dans le plan X-X. Il est important que le profilé permette également le montage latéral d'appareils électriques additionnels 16 (figure 2).

Chaque bloc 22 (figures 3 à 7) comporte vers sa face arrière 30 des conformations 31 d'encliquetage sur le profilé 20, et à partir de sa face avant 32 un nez 33 pour l'encliquetage des appareils électriques 15.

Des logements 34 sont prévus pour la fixation par vis de la pièce de fixation 22a sur le support 20 ou éventuellement d'un support avant déporté, formant un plan de montage parallèle à X2-X2, sur la pièce 12.

Les ailes 23a, 23b de chaque profilé 23 sont engagées dans des fentes correspondantes 35 du bloc 22 ; elles sont pincées dans ces fentes par des moyens de serrage 36 tels que des vis logées dans des orifices latéraux 37 qui sont ménagés dans une partie en retour ou un rebord 38 du bloc 22 et dans des orifices 39 du corps proprement dit 40 du bloc 22.

Lorsque les vis 36 sont desserrées, on déplace mutuellement le bloc 22 et le rail 23 de manière à régler avec une grande précision la position du bloc. Puis en serrant les vis 36, on provoque le pincement de l'aile du profilé 23 dans la fente grâce au fléchissement élastique du rebord 38 du bloc 22 ; en cas de fluage de la matière du bloc 22, il est facile de resserrer les vis 36.

Il est évident que l'on peut prévoir en variante d'autres moyens de serrage, par exemple à came, de l'aile du profilé 23 contre le bloc 22 ; les moyens ci-dessus décrits se signalent toutefois par leur grande simplicité et leur faible volume.

On voit, figure 7, que la tête 36a de la vis 36 vient en léger recouvrement sur l'extrémité de l'aile 23a et cela, sur une hauteur h, de manière à assurer un maintien efficace de cette extrémité.

Les figures 8 et 9 montrent des variantes de réalisation de consoles à double profilé en U ; les profilés peuvent être montés avec l'âme du U vers l'extérieur (figure 8) ou vers l'intérieur (figure 9), ce qui suppose dans ce dernier cas un corps 40 à partie centrale relativement amincie par rapport à la largeur totale du bloc 22.

Le dispositif décrit permet en outre de caler des appareils en profondeur par rapport au plan X2-X2, afin de faciliter leur couplage avec des moyens de commande situés sur la porte 14. Il permet aussi de caler par rapport au plan X2-X2 un plan de montage complet, parallèle à X2-X2 et déporté vers X1-X1, réalisé au moyen d'une traverse, d'un profilé, d'une platine perforée, etc...

## Revendications

1. Dispositif de support d'appareils électriques, notamment pour enveloppe telle que coffret ou armoire de distribution électrique basse tension,
caractérisé par un support (20) susceptible d'être fixé sur une paroi fixe (11) et par une console (21) comprenant :
- une pièce de fixation arrière (22a) montée de manière amovible sur le support,
- un profilé d'avancée (23) qui est disposé perpendiculairement à la paroi fixe et au support et qui est fixé à la pièce de fixation arrière,
- une pièce avant porteuse (22b) conformée pour porter des appareils électriques (15) ou un support déporté pour de tels appareils, cette pièce étant montée sur le profilé.

2. Dispositif selon la revendication 1, caractérisé en ce que des moyens de coulissement et des moyens de serrage sont associés à la pièce de fixation arrière (22a) et/ou à la pièce avant porteuse (22b) pour en autoriser respectivement un glissement relatif continu et un serrage desdites pièces sur le profilé d'avancée (23).

3. Dispositif selon la revendication 2, caractérisé en ce que les moyens de coulissement comprennent des fentes (35) ménagées dans la pièce de fixation et/ou dans la pièce porteuse, ces fentes étant aptes à recevoir les ailes (23a, 23b) du profilé (23), les moyens de serrage assurant le serrage des ailes dans les fentes.

4. Dispositif selon la revendication 3, caractérisé en ce que chaque fente (35) de la pièce de fixation (22a) et/ou de la pièce porteuse (22b) est délimitée par le corps (40) de ladite pièce et par un rebord (38) élastiquement déplaçable du corps, la largeur de la fente étant ajustée par un moyen de serrage continu (36).

5. Dispositif selon la revendication 4, caractérisé en ce que le moyen de serrage continu (36) est une vis dont la tête (36a) est logée dans le rebord élastique (38) de la pièce en recouvrement avec une partie de l'aile (23a, 23b) du profilé (23).

6. Dispositif selon l'une des revendications 2 à 5, caractérisé en ce qu'il est prévu de chaque côté de la pièce de fixation (22a) et/ou de la pièce porteuse (22b) deux fentes (35) de réception des ailes (23a, 23b) du profilé (23).

7. Dispositif selon l'une des revendications 1 à 6, caractérisé en ce que le profilé d'avancée (23) est un profilé normalisé.

8. Dispositif selon l'une des revendications 1 à 7, caractérisé en ce que la pièce de fixation arrière (22a) et la pièce porteuse avant (22b) sont constituées par des blocs de fixation identiques (22) dont chacun présente vers sa face arrière (30) des éléments d'encliquetage (31) sur le support (20) et vers sa face avant (32) un nez (33) d'encliquetage pour les appareils électriques (15).

9. Dispositif selon l'une des revendications 1 à 8, caractérisé en ce que la pièce de fixation arrière (22a) et la pièce porteuse avant (22b) sont constituées par des blocs de fixation identiques (22) dont chacun présente des logements (34) pour la fixation par vis du bloc sur le support (20) ou d'un support déporté sur le bloc.

FIG.1

FIG.3

FIG.2

FIG.4

FIG.5

FIG.7

FIG.8

FIG.9

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | DE-U-8614160 (K.KUKLIES)<br>* page 4, alinéa 2 - page 5, dernier alinéa *<br>* page 8, dernier alinéa; figures 1, 3 *<br>--- | 1 | H02B1/10 |
| A | DE-A-3723946 (AMACHER AG)<br>* abrégé; figures 1, 3 *<br>--- | 1 | |
| A | BE-A-853698 (SIEMENS AG)<br>* page 5; figure 2 *<br>----- | 1 | |

|  |  |
|---|---|
|  | **DOMAINES TECHNIQUES RECHERCHES (Int. Cl.5 )** |
|  | H02B |

Le présent rapport a été établi pour toutes les revendications

| Lieu de la recherche | Date d'achèvement de la recherche | Examinateur |
|---|---|---|
| LA HAYE | 04 SEPTEMBRE 1989 | WOODALL C.G. |

EPO FORM 1503 03.82 (P0402)